Europäisches Patentamt

**European Patent Office**

Office européen des brevets

(11) Numéro de publication: **0 145 511**
A1

# (12) DEMANDE DE BREVET EUROPEEN

(21) Numéro de dépôt: **84401731.9**

(22) Date de dépôt: **29.08.84**

(51) Int. Cl.⁴: **A 47 J 37/12**

(30) Priorité: **09.09.83 FR 8314364**

(43) Date de publication de la demande: **19.06.85**
**Bulletin 85/25**

(84) Etats contractants désignés: **BE DE NL**

(71) Demandeur: **SEB S.A., F-21260 Selongey (FR)**

(72) Inventeur: **Aubry, Gérard, La Maison Blanche,**
**F-70310 Faucogney (FR)**

(74) Mandataire: **Bouju, André, 38 Avenue de la Grande**
**Armée, F-75017 Paris (FR)**

(54) **Friteuse comportant une poignée de manipulation de son panier à friture.**

㊐ La friteuse comprend un récipient (1) fermé par un couvercle (2) et renfermant un panier à friture (3) qui est relié par une tige (4) traversant le couvercle à une poignée (5) qui permet de déplacer le panier entre une position basse et une position haute.

La poignée (5) est reliée à la tige (4) par des moyens à coulissement (10) qui permettent, lorsque le panier (3) est en position haute, de déplacer la poignée (5) vers le panier pour appliquer le joint d'étanchéité (9) de la poignée sur le couvercle (2).

Utilisation dans les friteuses équipées d'un filtre anti-odeur.

EP 0 145 511 A1

"Friteuse comportant une poignée de manipulation de son panier à friture."

La présente invention concerne une friteuse, notamment à usage domestique, comprenant un récipient destiné à recevoir de l'huile et un panier à friture. En position de cuisson, ce récipient est fermé de façon sensiblement étanche par un couvercle pouvant comporter un filtre pour éviter les odeurs de cuisson.

On connaît des friteuses dans lesquelles le panier à friture est relié par une tige traversant le couvercle, à une poignée extérieure de préhension du panier qui permet de déplacer le panier entre une position basse de cuisson et une position haute dans laquelle le mets à frire tel que des frites ne baigne plus dans l'huile chaude.

Dans certaines réalisations, la poignée comporte à sa partie inférieure un joint destiné à prendre appui autour d'une échancrure du couvercle par laquelle passe la tige pour obturer de façon étanche cette échancrure lorsque le panier est en position basse.

Cependant, lorsque le panier est déplacé vers la position haute, le joint précité solidaire de la poignée s'écarte du couvercle et de ce fait, l'échancrure n'est plus obturée par ce joint.

Par conséquent, dans cette position, la friteuse n'est plus étanche, de sorte que l'émission d'odeur de friture désagréable est inévitable malgré la présence d'un filtre dans le couvercle.

Le but de la présente invention est de remédier aux inconvénients des réalisations précitées en créant une friteuse équipée d'un dispositif de manoeuvre du panier qui permette, dans toutes les positions de celui-ci, d'obtenir une étanchéité satisfaisante du couvercle.

La friteuse visée par l'invention comprend un récipient pouvant être fermé de façon sensiblement étanche par un couvercle et renfermant un panier à friture qui est relié par une tige traversant le couvercle à une poignée de préhension du panier placée à l'extérieur

0145511

2

de la friteuse et permettant de déplacer le panier entre une position basse et une position haute, la poignée présentant un joint pour réaliser l'étanchéité entre celle-ci et le couvercle, lorsque le panier est en position basse.

Suivant l'invention, cette friteuse est caractérisée en ce que la poignée est reliée au panier par des moyens à coulissement qui permettent, lorsque le panier est en position haute, de déplacer la poignée vers le panier pour appliquer le joint d'étanchéité de la poignée sur le couvercle.

Grâce à ces moyens à coulissement, l'utilisateur peut, lorsque le panier est en position haute, déplacer la poignée vers le couvercle. Ainsi l'étanchéité entre la poignée et le couvercle peut être assurée, même lorsque le panier à friture est en position haute.

Selon une version avantageuse de l'invention, le panier comporte sur sa face latérale un coulisseau dans lequel sont engagées de façon amovible, d'une part la tige reliée à la poignée et d'autre part une glissière fixée verticalement sur la face latérale du récipient et parallèlement à la tige, des moyens étant prévus en outre pour verrouiller et déverrouiller la tige par rapport au coulisseau, ce dernier comportant lui-même des moyens pour verrouiller le panier en position haute.

Ainsi l'utilisateur peut, le couvercle du récipient étant fermé, manipuler le panier en l'accrochant soit en position haute dans le récipient, soit en le laissant reposer en position basse. Dans toutes ces positions, l'utilisateur peut amener le joint de la poignée en contact avec le couvercle et obtenir ainsi l'étanchéité souhaitée.

Selon une version préférée de l'invention, les moyens pour verrouiller la tige par rapport au coulisseau sont commandés par un bouton-poussoir monté sur la poignée.

En agissant sur ce bouton-poussoir, l'utilisateur peut facilement déverrouiller la tige de la poignée de façon à pouvoir faire coulisser la tige dans le coulisseau fixé au panier, le panier étant placé en position haute.

D'autres particularités et avantages de l'invention apparaîtront encore dans la description ci-après.

Aux dessins annexés donnés à titre d'exemples non limitatifs :

- la figure 1 est une vue en coupe longitudinale partielle d'une friteuse équipée d'un dispositif de manipulation du panier conforme à l'invention, le panier étant en position basse,

- la figure 2 est une vue analogue à la figure 1, le panier étant en position haute,

- la figure 3 est une vue du détail III de la figure 1, la tige étant déverrouillée par rapport au coulisseau du panier,

- la figure 4 est une vue en perspective avec arrachements d'une friteuse conforme à l'invention, le panier étant en position basse,

- la figure 5 est une vue analogue à la figure 4, le panier étant en position haute,

- la figure 6 est une vue analogue à la figure 4, montrant une variante des moyens de verrouillage.

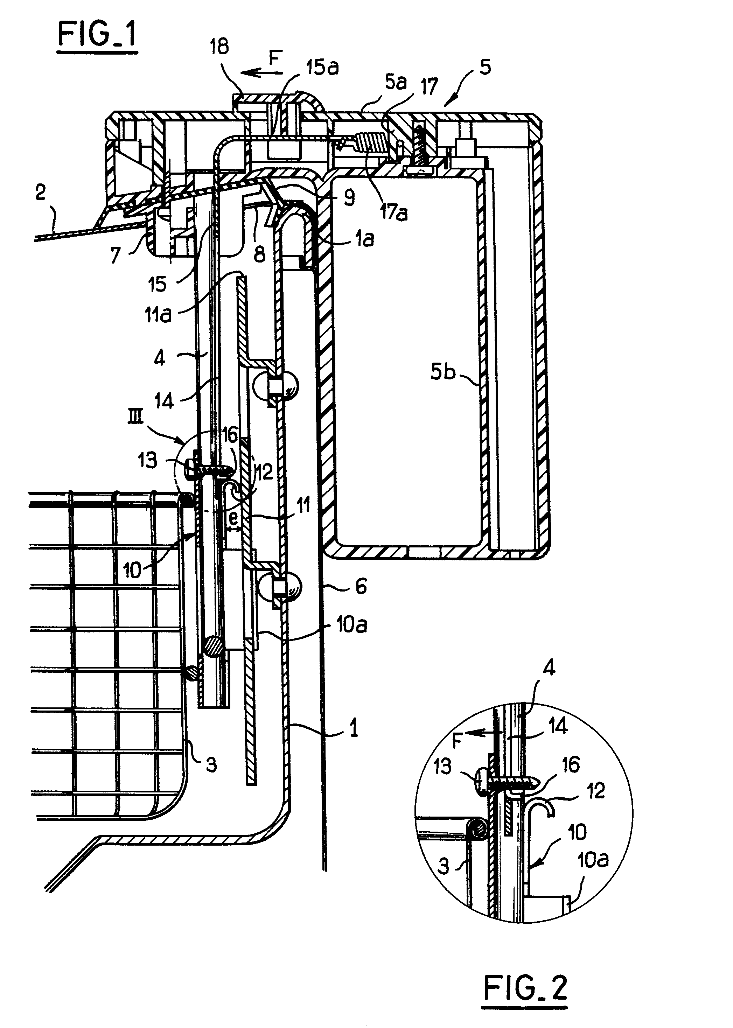

Dans la réalisation représentée sur les figures 1 à 5, la friteuse conforme à l'invention comprend un récipient 1 destiné à contenir de l'huile chauffée au moyen de résistances électriques non représentées.

Ce récipient 1 est fermé par un couvercle 2 pouvant comporter un filtre anti-odeur non représenté.

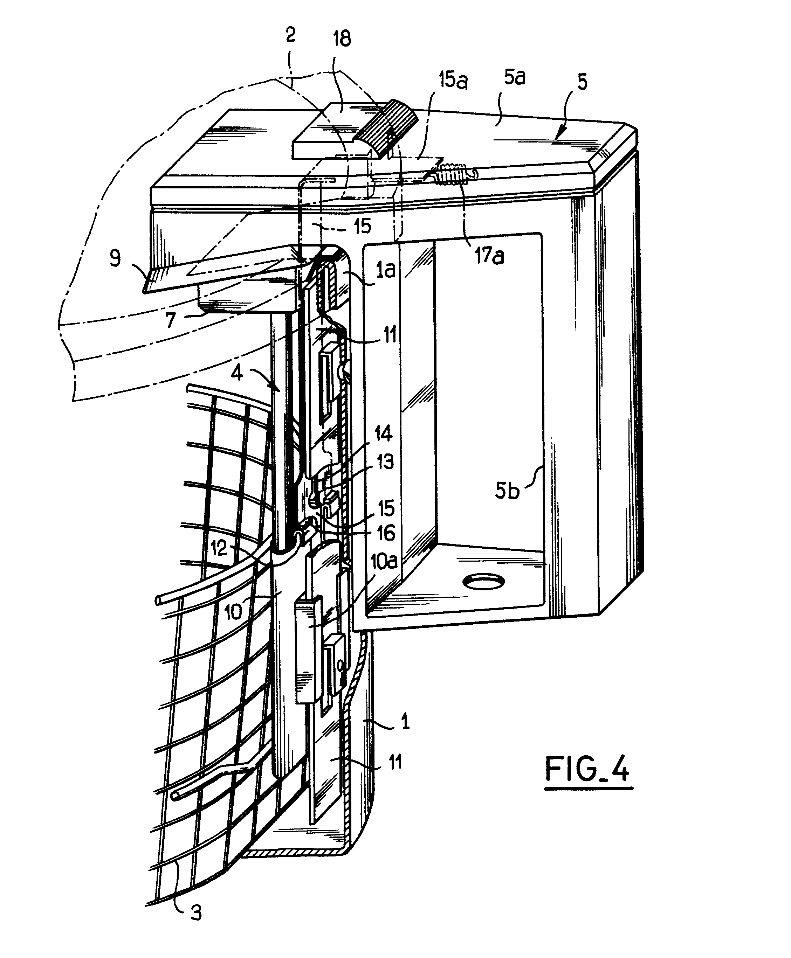

Le récipient 1 renferme un panier à friture 3 destiné à baigner dans l'huile lorsqu'il est en position basse, comme indiqué sur les figures 1 et 4.

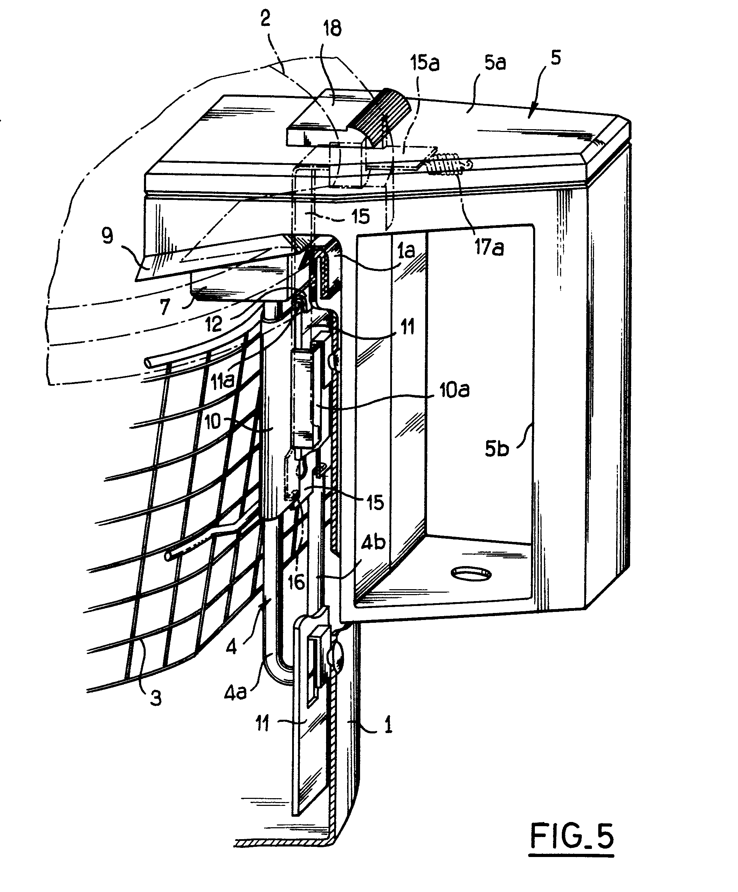

Ce panier à friture 3 est relié par une tige verticale 4 en deux éléments parallèles 4a, 4b (voir figures 4 et 5) à une poignée de préhension 5, placée à l'extérieur du récipient 1 et qui permet de déplacer le panier 3 entre une position basse (voir figure 1) et une position haute (voir figure 2) et inversement.

Cette poignée 5 présente une partie horizontale 5a qui s'étend au-dessus du bord supérieur 1a du récipient 1 et une partie verticale 5b qui s'étend le long de la paroi latérale extérieure 6 de la friteuse.

La partie horizontale 5a comporte une protubérance 7 dirigée vers le panier 3 et qui est engagée dans une ouverture 8 ménagée dans le couvercle 2. La tige 4 reliée au panier 3 est fixée dans cette protubérance 7. Autour de cette dernière est fixé un joint 9 à lèvres souples qui prend appui autour de l'ouverture 8 en obturant ainsi de façon étanche celle-ci.

Suivant la hauteur de la paroi latérale du panier 3, est fixé ,par exemple par soudage, un coulisseau 10 dans lequel est engagé la tige 4.

Le coulisseau 10 est lui-même engagé de façon coulissante autour d'une glissière 11 grâce à deux pattes 10a rabattues derrière celle-ci. Cette glissière 11 est fixée suivant la hauteur de la face latérale intérieure du récipient 1 et parallèlement à la tige 4.

Le bord supérieur 11a de la glissière 11 ne comporte aucune butée de façon que l'on puisse dégager ou engager le coulisseau 10 sur sa glissière 11.

Le coulisseau 10 comporte à son extrémité supérieure un crochet 12 plié vers la glissière 11 et vers le bas de façon à pouvoir accrocher le panier 3 en position haute comme indiqué sur la figure 2, en soulevant la poignée 5. Dans cette position, le crochet 12 coiffe le bord supérieur 11a de la glissière 11.

5

Lorsque le panier 3 est en position basse
(voir figure 1) ce crochet est en contact avec la glissière 11. Un jeu e défini par le crochet 12 est ménagé
entre le coulisseau 10 et la glissière 11 pour permettre
une translation du coulisseau 10 vers cette glissière 11
lorsque le crochet 12 dépasse le bord supérieur 11a
de la glissière 11 de façon que ce crochet 12 puisse
s'accrocher sur ce bord 11a, comme indiqué sur la figure 2.

L'extrémité supérieure du coulisseau 10
comporte d'autre part une vis 13 engagée dans la fente
verticale 14 (voir figures 1 et 4) d'une lame métallique 15 reliée à la poignée 5 et s'étendant parallèlement à la tige 4.

Dans la position représentée sur la figure 1,
cette vis 13 est en butée contre l'extrémité inférieure
de la fente 14 de la lame 15, de sorte que la tige 4
est verrouillée au coulisseau 10 et de ce fait le panier 3
est bloqué en position basse.

L'extrémité inférieure de la lame 15 comporte
une patte 16 pliée vers la glissière 11 qui, dans la
position représentée sur la figure 1 vient en butée
contre une contre-butée constituée par le crochet 12 du
coulisseau 10. Dans cette position, la tige 4 est par
conséquent verrouillée par rapport au coulisseau 10 dans
les deux sens du coulissement.

Dans l'exemple représenté, la lame 15 comporte
une partie verticale et une partie horizontale 15a.
Cette dernière s'étend à l'intérieur de la poignée 5
sensiblement dans l'axe d'allongement de sa partie horizontale 5a.

L'extrémité de la partie 15a de la lame 15
est reliée à une entretoise 17 de la poignée 5 par un
ressort 17a qui maintient la patte pliée 16 en position
verrouillée.

Par ailleurs, la partie horizontale 15a de la lame 15 est reliée à un bouton-poussoir 18 monté sur la poignée 5 et pouvant être déplacé par l'utilisateur dans une direction F opposée à l'action de rappel du ressort 17a,pour déverrouiller la patte pliée 16 de la lame 15 par rapport au crochet formant butée 12.

On va maintenant décrire le fonctionnement de la friteuse conforme à l'invention.

On supposera que le récipient 1 contient la quantité voulue d'huile. Cette dernière est mise à chauffer. Le panier 3 placé à l'extérieur du récipient 1 est rempli du metsà frire tel que des frites. On saisit la poignée 5 et on place l'ensemble dans le récipient 1 en engageant les pattes rabattues 10a du coulisseau 10 sur la glissière 11 de façon que ce coulisseau 10 fixé au panier 3 puisse coulisser sur cette glissière 11.

La descente du panier 3 est stoppée lorsque le crochet 12 s'accroche sur le bord supérieur 11a de la glissière 11, ce qui verrouille le panier 3 en position haute comme indiqué sur la figure 2.

Avant d'arriver à cette position, le couvercle 2 est fermé.

Dans cette position, le joint souple 9 prend appui autour de l'ouverture 8 du couvercle et obture ainsi de façon étanche cette ouverture.

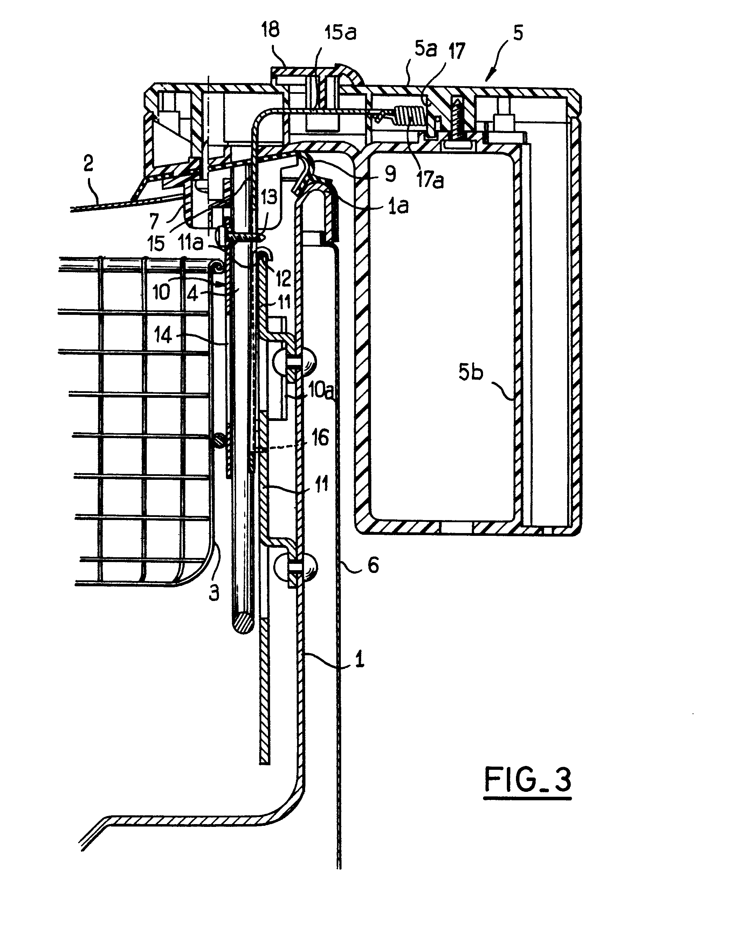

Supposons que la tige 4, au lieu d'être en position rapprochée du panier 3 soit en position éloignée comme indiqué sur la figure 1. Dans ce cas, pour approcher la poignée 5 du couvercle 2 et appliquer le joint 9 de cette poignée sur ce couvercle, il suffit de déverrouiller la patte pliée 16 de la lame 15 par rapport au crochet formant butée 12, en poussant le bouton 18 dans le sens de la flèche F comme indiqué sur les figures 1 et 3. Dans cette position déverrouillée (voir figure 3) l'utilisateur, en poussant la poignée 5 vers le bas, fait coulisser la tige 4 dans le coulisseau 10 jusqu'à ce que le joint 9 de la poignée 5 prenne appui de façon étanche sur le couvercle 2.

Lorsque l'huile a atteint la température requise, on soulève la poignée 5 de façon à faire coulisser la tige 4 dans une direction opposée au coulisseau 10 jusqu'à ce que la patte pliée 16 de la lame 15 dépasse le crochet 12 et s'engage au-dessus de celui-ci sous l'effet du rappel exercé par le ressort 17a.

On soulève ensuite légèrement la poignée 5 pour décrocher le crochet 12 du bord supérieur 11a de la glissière puis on descend l'ensemble constitué par la poignée et le panier 3 dans le récipient 1 jusqu'à la position indiquée sur la figure 1. Dans cette position, le joint souple 9 de la poignée 5 repose sur le couvercle 2 en empêchant tout dégagement gazeux malodorant.

Lorsque le temps de cuisson est écoulé, on soulève la poignée 5 jusqu'à ce que le crochet 12 s'accroche sur le bord supérieur 11a de la glissière 11 et fixe le panier 3 en position haute.

La poignée 5 est alors éloignée du couvercle 2. Pour établir l'étanchéité au niveau de l'ouverture 8, il suffit de pousser le bouton 18 dans le sens de la flèche F pour que la patte repliée 16 de la lame 15 s'efface au-dessus du crochet 12 de façon que la tige 4 puisse coulisser vers le panier 3 en poussant la poignée vers le bas. Ainsi le joint 9 de la poignée 5 ferme à nouveau de façon étanche l'ouverture 8 du couvercle de sorte qu'on empêche l'émission d'odeurs de cuisson par cette ouverture 8 dans les deux positions du panier 3.

Bien entendu, l'invention n'est pas limitée à l'exemple de réalisation que l'on vient de décrire et on peut apporter à celui-ci de nombreuses modifications sans sortir du cadre de l'invention.

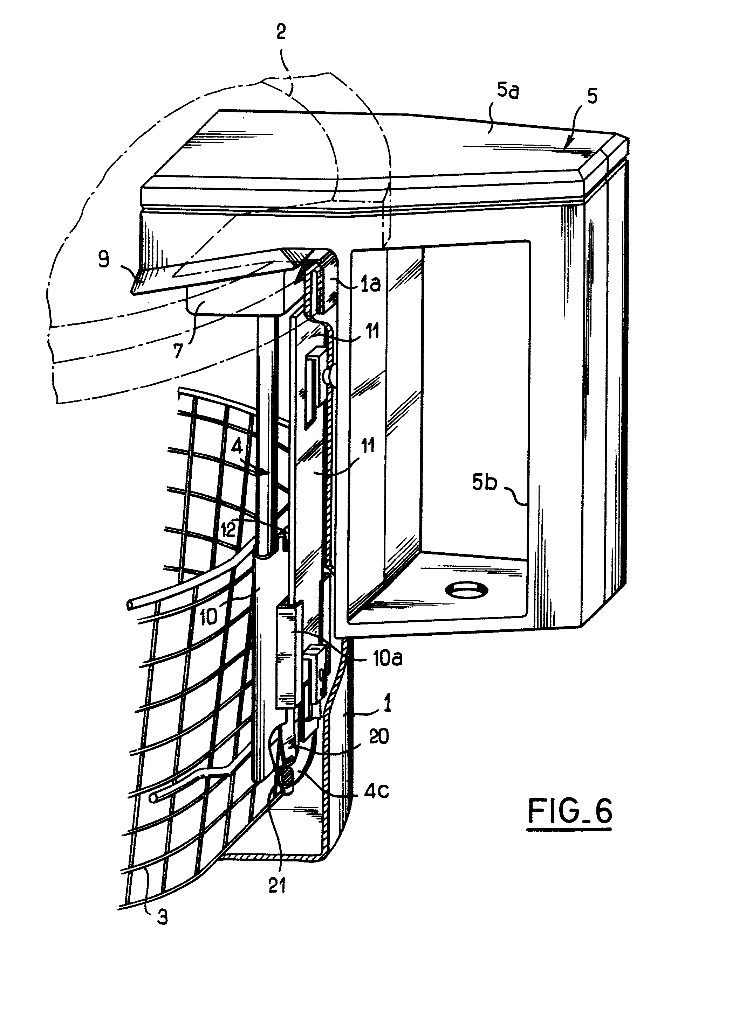

Dans la réalisation représentée sur la figure 6, le système de verrouillage par bouton-poussoir est remplacé par une lame élastique 20 fixée à la partie inférieure du coulisseau 10. L'extrémité de cette lame 20 présente une gorge 21 qui s'encliquette sur la partie transversale inférieure 4c qui réunit les deux éléments verticaux de la tige 4.

Ainsi, lorsque la poignée est en position haute et que le crochet 12 est accroché au bord supérieur 11a de la glissière, il suffit d'exercer une pression de haut en bas sur la poignée 5 pour dégager la gorge 21 de la lame 20 de la partie inférieure 4c de la tige 4 et déverrouiller ainsi cette dernière du coulisseau 10.

Dans une réalisation simplifiée, la tige 4 peut être complètement libre de coulisser par rapport au coulisseau 10.

Dans une autre réalisation simplifiée, la glissière 11 du récipient 1 est complètement supprimée et le coulisseau 10 s'accroche directement sur le bord 1a de ce récipient. Le crochet 12 est alors conformé selon le profil du bord du récipient. Le panier 3 prend dans ce cas les deux positions suivantes : accroché en porte-à-faux sur le bord 1a du récipient ou posé à même le fond de celui-ci.

9

REVENDICATIONS

1. Friteuse comprenant un récipient (1) pouvant être fermé de façon sensiblement étanche par un couvercle (2) et renfermant un panier à friture (3) qui est relié par une tige (4) traversant le couvercle à une poignée (5) de préhension du panier, placée à l'extérieur de la friteuse et permettant de déplacer le panier (3) entre une position basse et une position haute, la poignée (5) présentant un joint (9) pour réaliser l'étanchéité entre celle-ci et le couvercle (2) lorsque le panier est en position basse, caractérisée en ce que la poignée (5) est reliée à la tige (4) par des moyens à coulissement (10) qui permettent, lorsque le panier (3) est en position haute, de déplacer la poignée (5) vers le panier pour appliquer le joint d'étanchéité (9) de la poignée sur le couvercle (2).

2. Friteuse conforme à la revendication 1, caractérisée en ce que le panier (3) comporte sur sa face latérale un coulisseau (10) dans lequel sont engagées de façon amovible, d'une part la tige (4) reliée à la poignée (5), et d'autre part une glissière (11) fixée verticalement sur la face latérale du récipient (1) et parallèlement à la tige (4), en ce que des moyens (16, 12, 14, 20, 21) sont prévus pour verrouiller et déverrouiller la tige (4) par rapport au coulisseau (10) et en ce que ce dernier comporte lui-même des moyens (12) pour verrouiller le panier (3) en position haute.

3. Friteuse conforme à la revendication 2, caractérisée en ce que les moyens (16) pour verrouiller la tige (4) par rapport au coulisseau (10) sont commandés par un bouton-poussoir (18) monté sur la poignée (5).

4. Friteuse conforme à l'une des revendications 2 ou 3, caractérisée en ce que les moyens pour verrouiller la tige (4) par rapport au coulisseau (10) comprennent une lame (15) sollicitée par un ressort (17a) solidaire de la poignée (5) et comportant une partie (16)

10

pouvant constituer une butée par rapport à une contre-butée (12) ménagée sur le coulisseau (10) lorsque la poignée (5) est en position éloignée par rapport au coulisseau (10), ladite partie (16) de la lame (15) pouvant être effacée de ladite contre-butée (12) en déplaçant le bouton-poussoir (18) contre l'action du ressort (17) sollicitant la lame (15).

5. Friteuse conforme à la revendication 4, caractérisée en ce que la lame (15) comporte une fente verticale (14) dans laquelle est engagé un doigt (13) solidaire du coulisseau (10), l'extrémité inférieure de cette fente (14) constituant une butée par rapport à ce doigt, empêchant le dégagement de la tige (4) du coulisseau (10).

6. Friteuse conforme à l'une des revendications 2 à 5, carctérisée en ce que les moyens pour verrouiller le coulisseau (10) par rapport à la partie supérieure de la glissière (11) comportent un crochet (12) ménagé sur ledit coulisseau et pouvant s'accrocher sur le bord supérieur (11a) de la glissière (11).

7. Friteuse conforme à la revendication 6, caractérisée en ce que le crochet (12) constitue la contre-butée du coulisseau (10).

8. Friteuse conforme à l'une des revendications 6 ou 7, caractérisée en ce qu'en position de déverrouillage du coulisseau (10) par rapport à la glissière (11), le crochet (12) est en contact avec la glissière et en ce qu'entre le coulisseau (10) et la glissière (11) est ménagé un jeu (e) suffisant pour permettre une translation du coulisseau (10) vers la glissière (11) lorsque le crochet (12) dépasse le bord supérieur (11a) de la glissière, de façon que ce crochet puisse s'accrocher sur ledit bord.

FIG_1

FIG_2

FIG_3

FIG_4

FIG.5

FIG_6

Office européen
des brevets

**RAPPORT DE RECHERCHE EUROPEENNE**

Numéro de la demande

EP 84 40 1731

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-U-8 020 281 (SEVERIN & CO.) | | A 47 J 37/12 |
| | --- | | |
| A | FR-A-2 473 868 (KRUPS) | | |
| | --- | | |
| A | DE-A-2 931 859 (KRUPS) | | |
| | ----- | | |

| | | | DOMAINES TECHNIQUES RECHERCHES (Int. Cl.4) |
|---|---|---|---|
| | | | A 47 J |

Le présent rapport de recherche a été établi pour toutes les revendications

| Lieu de la recherche LA HAYE | Date d'achèvement de la recherche 30-11-1984 | Examinateur SCHARTZ J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82